# EUROPEAN PATENT APPLICATION

(11) **EP 4 586 089 A1**
(43) Date of publication of application: **16.07.2025**
(21) Application number: 24151888.5
(22) Date of filing: 15.01.2024
(51) Int. Cl.: G06F 9/48, G06F 9/50, G06F 8/61

(54) **METHOD AND SYSTEM FOR HANDLING ACTIVATION OF A COMPUTER APPLICATION IN A VEHICLE**

(71) Applicant: VOLVO TRUCK CORPORATION, 405 08 Göteborg (SE)
(72) Inventor: BJÖRKLUND, Anders, 418 77 GÖTEBORG (SE); JAVAHERI, Reza, 438 91 LANDVETTER (SE)
(74) Representative: Valea AB

(57) **Abstract**

This disclosure relates to a computer system (201, 500) for handling activation of a computer application (203) in a vehicle (100), the computer system (201, 500) comprising processing circuitry (502) configured to:
monitor fulfillment of a first activation condition for activating the computer application (203), wherein the first activation condition is fulfilled when a trigger associated with the vehicle (100) has occurred;
when the first activation condition has been fulfilled, determine which computer application (203) of a plurality of known computer applications that is associated with the first activation condition, wherein the associated computer application (203) is currently inactivated and not using one or more computer system resources; and to
activate the computer application (203) associated with the first activation condition and allowing it to use computer system resources.

## Description

### TECHNICAL FIELD

The disclosure relates generally to a computer system, a vehicle, a computer-implemented method, a computer program product and non-transitory computer-readable storage medium. In particular aspects, the disclosure relates to handling activation of a computer application in a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A vehicle comprises and is associated with a number of computer applications and services. The computer applications may be Android user, privileged or system applications, just to mention some examples. These computer applications and services need to be triggered, informed or brought up to the display when specific events occur. For this to happen, the computer application or service themselves need to subscribe to one or more signals in the background and keep monitoring for the specific event to occur.

If it should be possible to trigger or wake up a computer application, for example an Android computer application, it means that the computer application itself must be listening for a certain trigger and in most cases, it forces the computer application to be a privileged application or a system application. This also means increasing the risk for cyber security threats especially in case of a Third-Party Publisher (3PP) application. As the Original Equipment Manufacturers (OEMs) have limited resources to do the proper provisioning and code review of 3rd party solutions every time a computer application is updated, this in most cases creates more difficulty for 3rd parties to release computer applications on OEM's platforms.

Hence, there is a need to further improve handling of activation of computer applications in a vehicle.

### SUMMARY

According to a first aspect of the disclosure, a computer system for handling activation of a computer application in a vehicle is provided. The computer system comprising processing circuitry configured to:
- monitor fulfillment of a first activation condition for activating the computer application, wherein the first activation condition is fulfilled when a trigger associated with the vehicle has occurred;
- when the first activation condition has been fulfilled, determine which computer application of a plurality of known computer applications that is associated with the first activation condition, wherein the associated computer application is currently inactivated and not using one or more computer system resources; and to
- activate the computer application associated with the first activation condition and allowing it to use computer system resources.

The first aspect of the disclosure may seek to provide improved handling of activation of a computer application in a vehicle. A technical benefit may include that handling of activation of a computer application in a vehicle is improved. The computer application is activated when the first activation condition is fulfilled, i.e. the computer application is activated only when it is necessary. Unnecessary use of the computer system resources is avoided. The computer application is activated when a trigger associated with the vehicle has occurred. Thus, it is clear that the activated computer application is associated with something that has occurred related to the vehicle. The reason for the activated computer application is clear and easy to understand. The computer system has control over which computer systems that are activated such that for example 3^{rd} party computer applications do not have to be a privileged application or a system application in order to be installed and activated. Since the computer system has the control, it reduces the risk cyber security threats from 3^{rd} party computer applications. Furthermore, the computer application itself does not have to be able to monitor triggers associated with the vehicle since it is the computer system that does this, i.e. a proxy unit located between the computer system and the computer system resources. The computer application remains deactivated until it becomes activated by the computer system and does not have to use processing resources for monitoring what happens in the vehicle. The computer application only needs to be able to be activated by the computer system, i.e. the proxy unit, i.e. to receive a wakeup signal from the computer system.

Optionally in some examples, including in at least one preferred example, the processing circuitry may be further configured to:
- determine whether a second activation condition has been fulfilled, wherein the second activation condition is fulfilled when the vehicle user's workload is below a workload threshold.

A technical benefit may include that handling of activation of a computer application in a vehicle is improved. The computer application is activated when the first activation condition is fulfilled, i.e. the computer application is activated only when it is necessary. Unnecessary activation of the computer application is avoided, but activation is also guaranteed when the activation conditions are fulfilled. This may increase the safety of driving the vehicle since the vehicle user's attention will not be directed away from the driving task, and not get distracted with unnecessary activation of the computer application.

Optionally in some examples, including in at least one preferred example, the computer application may be activated when the first activation condition and the second activation condition have been fulfilled.

A technical benefit may include that handling of activation of a computer application in a vehicle is improved. When both the first activation condition and the second activation condition are fulfilled, it is ensured that the computer application is activated only when necessary. Thus, improved safety is improved.

Optionally in some examples, including in at least one preferred example, the processing circuitry may be further configured to:
- determine to queue activating the computer application when the first activation condition has been fulfilled and the second activation condition has not been fulfilled, wherein the activation is queued until the second activation condition has been fulfilled.

A technical benefit may include that the computer application is activated only when the second activation condition has been fulfilled, i.e. when it is safe from a vehicle user's workload point of view to activate the computer application.

Optionally in some examples, including in at least one preferred example, the processing circuitry may be further configured to:
- trigger to display information associated with the computer application in a display onboard the vehicle.

A technical benefit may include that the computer application is easily visible to the vehicle user when he/she is located onboard the vehicle. With the display onboard the vehicle, the vehicle user can review the displayed information and continue to operate the vehicle, i.e. it is not necessary for the user to stop operating the vehicle in order to review the displayed information. Thus, interactions between the computer application and the vehicle user are improved.

Optionally in some examples, including in at least one preferred example, the processing circuitry may be further configured to:
- determine whether or not the computer application associated with the first activation condition is currently installed onboard the vehicle.

A technical benefit may be that it helps the driver to discover a new computer application that is not currently installed on the vehicle, but the computer application can be triggered and handle the first activation condition. A technical benefit may include that it may be possible to activate a computer application even though it is not currently installed when the first activation condition is fulfilled. In other words, the computer application can be installed after the first activation condition has been fulfilled. This way, a computer application is not unnecessarily installed onboard the vehicle, but only when necessary, according to the fulfilled first activation condition. This also reduces the amount of data stored in a memory storage of the vehicle.

Optionally in some examples, including in at least one preferred example, the processing circuitry may be further configured to:
- trigger to install the computer application when it is not currently installed.

A technical benefit may be that it helps the driver to discover a new computer application that is not currently installed on the vehicle, but the computer application can be triggered and handle the first activation condition. A technical benefit may include that it may be possible to activate a computer application even though it is not currently installed when the first activation condition is fulfilled. In other words, the computer application can be installed after the first activation condition has been fulfilled. This way, a computer application is not unnecessarily installed onboard the vehicle, but only when necessary, according to the fulfilled first activation condition. This also reduces the amount of data stored in a memory storage of the vehicle.

Optionally in some examples, including in at least one preferred example, the computer application may be activated after the computer application has been installed.

A technical benefit may be that it helps the driver to discover a new computer application that is not currently installed on the vehicle, but the computer application can be triggered and handle the first activation condition. A technical benefit may include that it may be possible to activate a computer application even though it is not currently installed when the first activation condition is fulfilled. In other words, the computer application can be installed after the first activation condition has been fulfilled. This way, a computer application is not unnecessarily installed onboard the vehicle, but only when necessary, according to the fulfilled first activation condition. This also reduces the amount of data stored in a memory storage of the vehicle.

Optionally in some examples, including in at least one preferred example, the first activation condition may be one or more of: a full diff-lock, activation of a Power Take Off (PTO) entering or leaving a geofenced area, driving with reverse gear, request assistance, maintenance required, trailer connected to the vehicle, an auxiliary device connected to the vehicle, a trailer not being in driving position.

A technical benefit may include that handling of activation of a computer application in a vehicle is improved. The computer application is activated when the first activation condition is fulfilled, i.e. the computer application is activated only when it is necessary. Unnecessary activation of the computer application is avoided, but activation is also guaranteed when the activation conditions are fulfilled. The computer application is activated when a trigger associated with the vehicle has occurred. Thus, it is clear that the activated computer application is associated with something that has occurred related to the vehicle. The reason for the activated computer application is clear and easy to understand.

According to a second aspect of the disclosure, a vehicle comprising the computer system of the first aspect is provided.

The second aspect of the disclosure may seek to provide improved handling of activation of a computer application in a vehicle. A technical benefit may include that handling of activation of a computer application in a vehicle is improved. The computer application is activated when the first activation condition is fulfilled, i.e. the computer application is activated only when it is necessary. Unnecessary activation of the computer application is avoided, but activation is also guaranteed when the activation conditions are fulfilled. The computer application is activated when a trigger associated with the vehicle has occurred. Thus, it is clear that the activated computer application is associated with something that has occurred related to the vehicle. The reason for the activated computer application is clear and easy to understand.

Technical benefits of the second aspect correspond to the technical benefits of the first aspect, and vice versa.

According to a third aspect of the disclosure, a computer-implemented method for handling activation of a computer application in a vehicle is provided. The method comprising:
- *monitoring*, by a processing circuitry of a computer system, fulfillment of a first activation condition for activating the computer application, wherein the first activation condition is fulfilled when a trigger associated with the vehicle has occurred;
- when the first activation condition has been fulfilled, *determining,* by the processing circuitry, which computer application of a plurality of known computer applications that is associated with the first activation condition, wherein the associated computer application is currently inactivated and not using one or more computer system resources; and
- *activating*, by the processing circuitry, the computer application associated with the first activation condition and allowing it to use computer system resources.

The third aspect of the disclosure may seek to provide improved handling of activation of a computer application in a vehicle. A technical benefit may include that handling of activation of a computer application in a vehicle is improved. The computer application is activated when the first activation condition is fulfilled, i.e. the computer application is activated only when it is necessary. Unnecessary activation of the computer application is avoided, but activation is also guaranteed when the activation conditions are fulfilled. The computer application is activated when a trigger associated with the vehicle has occurred. Thus, it is clear that the activated computer application is associated with something that has occurred related to the vehicle. The reason for the activated computer application is clear and easy to understand.

Technical benefits of the third aspect correspond to technical benefits of the second aspect and the first aspect, and vice versa.

Optionally in some examples, including in at least one preferred example, the method may further comprise:
- *determining,* by the processing circuitry, whether a second activation condition has been fulfilled, wherein the second activation condition is fulfilled when the vehicle user's workload is below a workload threshold

A technical benefit may include that handling of activation of a computer application in a vehicle is improved. The computer application is activated when the first activation condition is fulfilled, i.e. the computer application is activated only when it is necessary. Unnecessary activation of the computer application is avoided, but activation is also guaranteed when the activation conditions are fulfilled. This may increase the safety of driving the vehicle since the vehicle user's attention can fully directed to the driving task, and not get distracted with unnecessary activation of the computer application.

Optionally in some examples, including in at least one preferred example, the computer application may be activated when the first activation condition and the second activation condition have been fulfilled.

A technical benefit may include that handling of activation of a computer application in a vehicle is improved. When both the first activation condition and the second activation condition are fulfilled, it is ensured that the computer application is activated only when necessary. Thus, improved safety is improved.

According to a fourth aspect of the disclosure, computer program product is provided. The computer program product comprises program code for performing, when executed by a processing circuitry, the method of the third aspect.

The fourth aspect of the disclosure may seek to provide improved handling of activation of a computer application in a vehicle. A technical benefit may include that handling of activation of a computer application in a vehicle is improved. The computer application is activated when the first activation condition is fulfilled, i.e. the computer application is activated only when it is necessary. Unnecessary activation of the computer application is avoided, but activation is also guaranteed when the activation conditions are fulfilled. The computer application is activated when a trigger associated with the vehicle has occurred. Thus, it is clear that the activated computer application is associated with something that has occurred related to the vehicle. The reason for the activated computer application is clear and easy to understand.

Technical benefits of the fourth aspect correspond to technical benefits of the third aspect, the second aspect and the first aspect, and vice versa.

According to a fifth aspect of the disclosure, a non-transitory computer-readable storage medium is provided. The non-transitory computer-readable storage medium comprises instructions, which when executed by a processing circuitry, cause the processing circuitry to perform the method of the third aspect.

The fifth aspect of the disclosure may seek to provide improved handling of activation of a computer application in a vehicle. A technical benefit may include that handling of activation of a computer application in a vehicle is improved. The computer application is activated when the first activation condition is fulfilled, i.e. the computer application is activated only when it is necessary. Unnecessary activation of the computer application is avoided, but activation is also guaranteed when the activation conditions are fulfilled. The computer application is activated when a trigger associated with the vehicle has occurred. Thus, it is clear that the activated computer application is associated with something that has occurred related to the vehicle. The reason for the activated computer application is clear and easy to understand.

Technical benefits of the fifth aspect correspond to technical benefits of the fourth aspect, the third aspect, the second aspect and the first aspect, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary drawing of a vehicle, according to an example.
**FIG. 2** is an exemplary block diagram illustrating parts of the vehicle, according to an example.
**FIG. 3** is an exemplary flow chart illustrating a method, according to an example.
**FIG. 4** is another view of **FIG. 1**, according to an example.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

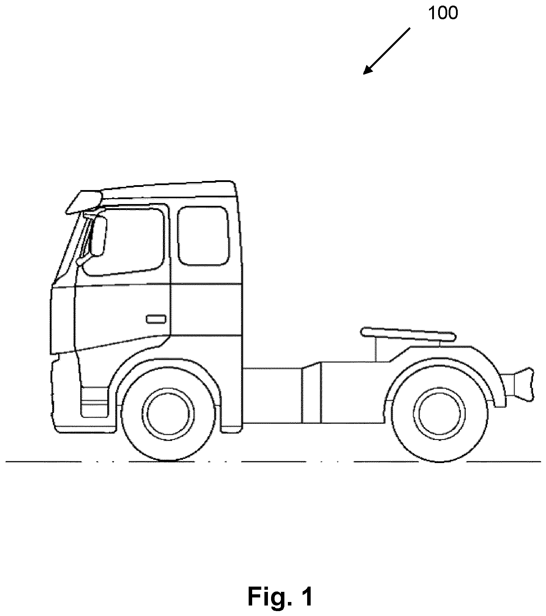

**FIG. 1** is an exemplary drawing of a vehicle **100**, according to an example. The vehicle **100** is a heavy-duty vehicle such as truck, bus, marine vessel, and construction equipment, among other vehicle types. Although the disclosure may be described with respect to a particular vehicle, the disclosure is not restricted to any particular vehicle.

The vehicle **100** may be a fully electric vehicle, it may be a hybrid vehicle comprising an electric motor and a combustion engine, or it may be a vehicle fully driven by a combustion engine.

The vehicle **100** may be a fully manually operated vehicle, it may be a partly autonomous vehicle, or it may be a fully autonomous vehicle.

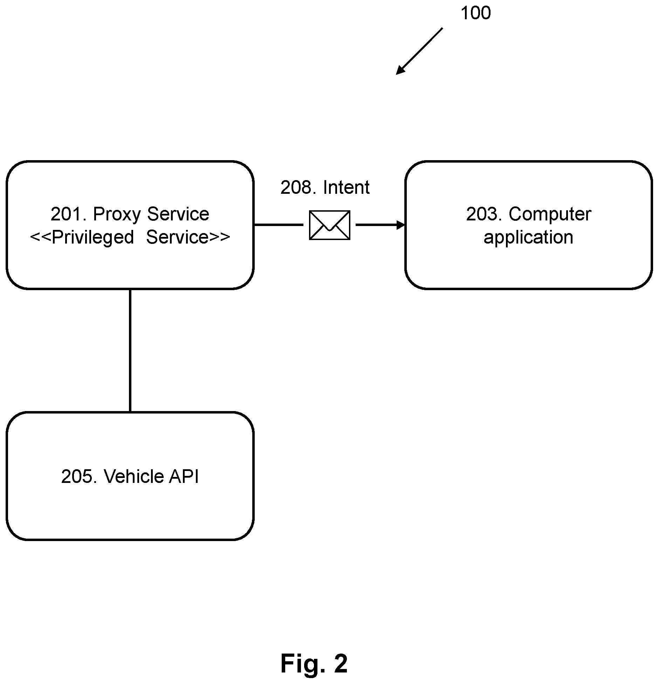

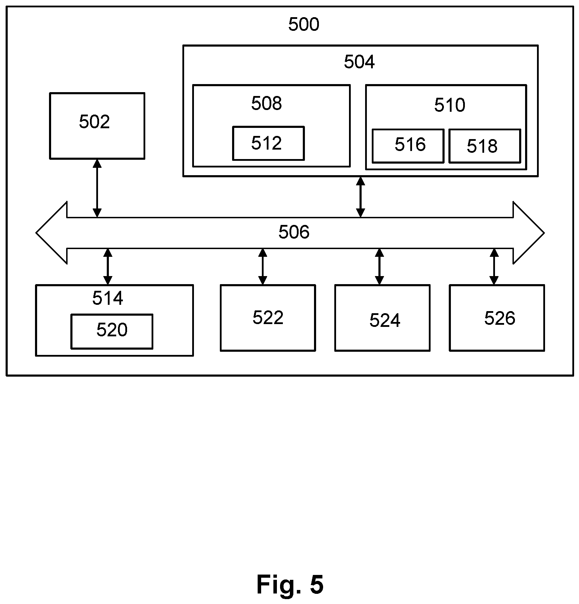

**FIG. 2** is an exemplary block diagram illustrating parts of the vehicle **100**, according to an example. The vehicle **100** comprises a proxy service **201.** The proxy service **201** may be a computer system **500** or comprised in the computer system, it may be a processing circuitry or comprised in the processing circuitry, it may be a computer system **500** comprising a processing circuitry or it may be comprised in the computer system **500** comprising the processing circuitry. The term proxy service **201** and computer system **500** may be used interchangeably herein, and the reference number **500** is found in **FIG. 5**, which will be described in more detail later. The proxy service **201** may be referred to as a privileged service. A privileged service may be described as a service that does have permission to access more system resources that user computer applications, i.e. ordinary computer applications, do not have permission to access. This way, the surface of attack from a malicious user may be reduced by limiting the number of computer applications/services that are privileged to have more access to system resources. The proxy service **201** is arranged to act as a proxy, i.e. an intermediate service or a gateway between a computer application **203** and a vehicle Application Program Interface (API) **205.** The proxy service **201** is arranged to, for example, monitor the activation conditions using the vehicle API **205** and activate one or many computer applications **203** when relevant activation conditions are fulfilled.

The vehicle **100** comprises at least one computer application **203,** i.e. any *n* number of computer applications **203,** where n is a positive integer. Thus, the proxy service **201** is arranged to act as a proxy between the n number of computer applications **203** and the vehicle API **205.** The computer application **203** may be an Android application or an Android service, just to mention some examples. The computer application **203** may be a 3PP application, e.g. a user application. The computer application **203** is comprised in the vehicle 100, i.e. it is implemented in the vehicle **100.**

The computer application **100** may be inactivated or activated. When it is inactivated, the computer application **203** may be in a sleeping mode, a disabled mode, a first mode, it is not running etc. When it is inactivated, the computer application **203** may not be allowed to use the vehicle's computer system resources, e.g. it may not be allowed to display information on a display in the vehicle **100.** When it is activated, the computer application **100** may be in an awake mode, an enabled mode, a second mode, it is running etc. When it is activated, the computer application **203** may be allowed to use the vehicle's computer system resources, e.g. it may be allowed to display information on a display in the vehicle **100.**

The vehicle **100** comprises at least one vehicle API **205,** i.e. any *m* number of APIs **205**, where *m* is a positive integer. The vehicle API **205** is arranged to allow the computer application **203** to connect to and/or communicate with other vehicle services, etc.

The computer application **203** may be arranged to send information indicating an intent **208** to the proxy service **201.** The intent **208** may be the name of an Android mechanism to provide a way for computer applications **203** and services to communicate even if the receiving side is not active, which Android system activates the receiving side in that case. The proxy service **201** is arranged to receive the information indicating the intent **208** and to determine if the computer application **203** should be allowed to be activated when the activation condition(s) are fulfilled. When the computer application **203** has been allowed to be activated, it may be displayed in a display comprised in the vehicle **100.** This way, the proxy service **201** may keep control of which computer applications **203** that are connected to the vehicle API **205**, which and when a computer application **203** is displayed to a user of the vehicle **100**, e.g. the driver, an operator or any other suitable person.

The proxy service **201** may monitor for predefined events, or vehicle states. The proxy service **201** may also take care of vehicle mode or other surrounding conditions were triggering the computer application **203** may be queued or deferred, e.g., when the workload of the vehicle user is quite high, and vehicle user needs to work in a distraction-free way. This proxy service **203**, upon meeting the triggering condition, may wake up the computer application **203** that is indicated in their manifest file for such events. The

When a certain behavior is done by the vehicle **100**, the proxy service **201** will activate a computer application **203** that is inactive, e.g. it is not running and not using one or more system resources. Three example cases may be as follows:
Case 1: When the vehicle **100** has a full diff-lock, the computer application **203** should be activated by being displayed in the display and showing the angle of the steering wheels.
Case 2: When a PTO comprised in the vehicle **100** is activated, the computer application **203** related to the PTO is activated, e.g. the 3rd party application from the supplier of the PTO.
Case 3: Generic - when a signal is sent from the vehicle **100** via the vehicle API **205**, the proxy service **201** fetches the signal and assuming that the activation condition for the computer application **203** related to that signal is fulfilled. The proxy service **201** sends an intent **208** to the computer application **203.**

The example case 2 related to the PTO will now be described in more detail:
The proxy service **203** is arranged to run a foreground service that listens for special events from vehicle API **205** and resolves a certain explicit intent **208** to make sure that receiver application, i.e. the computer application **203,** is installed on the vehicle **100.** The events may be e.g. PTO or diff locks. If the computer application **203** is installed on the vehicle **100**, it will fire up the intent **208** to that computer application **203** with the details of the event in the intent bundle.

The proxy service **201** needs to be updated with introducing new integrations.

The proxy service **201** may have a Human Machine Interface (HMI) or it may not need to have any HMI. With an HMI, the proxy service **201** may be easy to modify and monitor the computer application **203.** Without an HMI, the proxy service **201** may be made completely headless.

The proxy service **201** may be arranged to take care of other conditions such as user interaction restrictions and may be arranged to make sure to call the receiver app, i.e. the computer application **203,** at the right time without distracting the vehicle user, e.g. the driver. In case the calling conditions are not met, it can queue up for the call later, if still valid, and fires up the intent when the condition allows it.

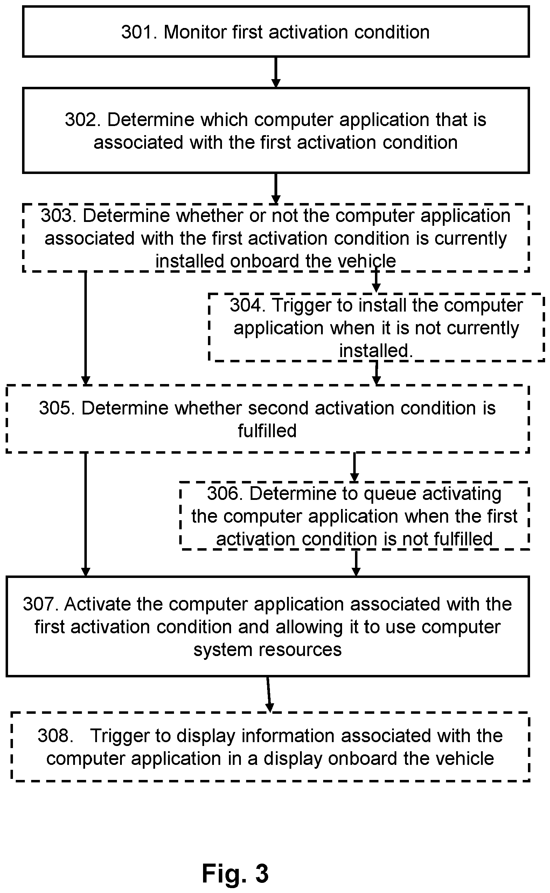

**FIG. 3** is a flow chart of a method for handling activation of a computer application **203** in a vehicle **100**, according to an example. The method is a computer-implemented method. The method may be performed by the proxy service **201.** The method may be performed by a processing circuitry **502** of the computer system **500.** At the start of the method, the computer application 203 is inactivated. At the start of the method, the computer application 203 may be installed in the vehicle **100** or it may not be installed in the vehicle **100.** Optional steps may be indicated with dotted lines. The method comprises at least one of the following steps, which steps may be performed in any suitable order than described below:

Step **301:** Fulfillment of a first activation condition for activating the computer application **203** is monitored. The first activation condition is fulfilled when a trigger associated with the vehicle **100** has occurred.

The trigger for the first activation condition may be one or more of: a full diff-lock, activation of a PTO, entering or leaving a geofenced area, driving with reverse gear, request assistance, maintenance required, trailer connected to the vehicle **100**, an auxiliary device connected to the vehicle 100 and a trailer not being in driving position. In other words, the trigger may be that a vehicle event has occurred, that a vehicle state has been detected, that an event or state in the vehicle or the vehicle's surroundings has occurred. The trigger may be associated with, for example a PTO, diff lock, 3^{rd} party equipment etc.

Step **302:** When the first activation condition has been fulfilled, it is determined which computer application **203** of a plurality of known computer applications that is associated with the first activation condition. The associated computer application **203** is currently inactivated and does not use one or more computer system resources. The computer system resources may comprise Random-Access Memory (RAM) memory, Central Processing Unit (CPU) and Graphics Processing Unit (GPU) time. The computer system resources do not include memory storage. The computer application **203** may exist on the storage from before, but it is not running in foreground meaning that it does not take any RAM memory or execution time from the CPU or GPU.

Step **303:** It may be determined whether or not the computer application **203** associated with the first activation condition is currently installed onboard the vehicle **100.** This may help the driver to discover a new computer application **203** that is not currently installed on the vehicle **100**, but the computer application **203** can be triggered and handle the first activation condition.

Step **304:** It may be triggered to install the computer application **203** when it is not currently installed. The computer application **203** may be activated after it has been installed.

Step **305:** It may be determined whether a second activation condition has been fulfilled. The second activation condition may be fulfilled when the user's workload is below a workload threshold. The vehicle user is the user of the vehicle **100**, e.g. the driver, an operator etc. The vehicle user's workload may be related to the vehicle user's degree of distraction related to driving the vehicle **100.**

When the vehicle user's workload is below the workload threshold, it may be considered to be safe to distract the vehicle user with activation of the computer application **203.** When the vehicle user's workload has reached or exceeded the workload threshold, it may be considered to be unsafe to distract the vehicle user with activation of the computer application **203.**

The workload threshold may be predefined.

To determine that the vehicle user's workload is below the workload threshold, data recorded by user monitoring sensors comprised in the vehicle **100** may be collected, analyzed and compared with the workload threshold. Thus, the vehicle user's workload is determined based on the data recorded by the user monitoring sensors.

Step **306:** It may be determined to queue activating the computer application **203** when the first activation condition has been fulfilled and the second activation condition has not been fulfilled. The activation may be queued until the second activation condition has been fulfilled.

Step **307:** The computer application **203** associated with the first activation condition is activated and thus allowing it to use computer system resources.

The computer application **203** may be activated when the first activation condition and the second activation condition have been fulfilled, i.e. when both conditions have been fulfilled.

Step **308:** It may be triggered to display information associated with the computer application **203** in a display onboard the vehicle **100.**

The method illustrated in fig. 3 improves handling of activation of a computer application in a vehicle. The computer application **203** is activated when the first activation condition is fulfilled, i.e. the computer application **203** is activated only when it is necessary. Unnecessary activation of the computer application **203** is avoided. Furthermore, it may be guaranteed that the activation occurs. This is because of the Android system and when the Android system is constrained on resources, it can terminate certain processes. The present disclosure avoids unnecessary activation but also guarantees activation when it is due by monitoring that the computer application **203** is invoked and is brought up to the display. The computer application **203** is activated when a trigger associated with the vehicle **100** occurs. Thus, it is clear that the activated computer application **203** is associated with something that has occurred related to the vehicle **100.** The reason for the activated computer application **100** is clear and easy to understand.

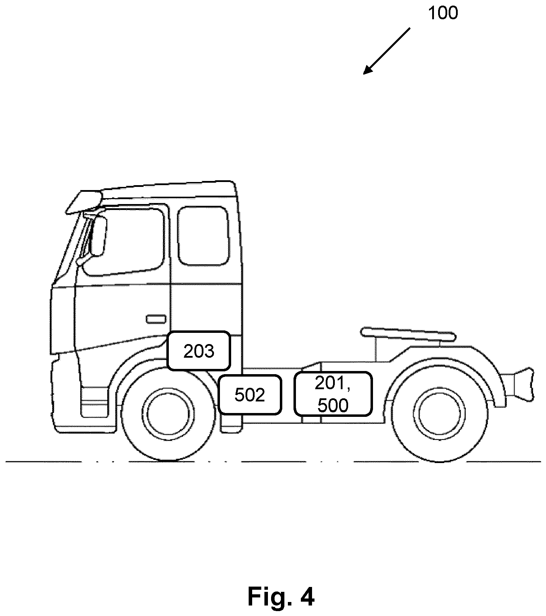

**FIG. 4** is another view of **FIG. 1**, according to an example. The vehicle **100** comprises the computer system **500.** The computer system **500** for handling activation of a computer application **203** in a vehicle **100** comprises a processing circuitry **502** configured to monitor fulfillment of a first activation condition for activating the computer application **203.** The first activation condition is fulfilled when a trigger associated with the vehicle **100** has occurred.

The trigger for the first activation condition may be one or more of: a full diff-lock, activation of a PTO, entering or leaving a geofenced area, driving with reverse gear, request assistance, maintenance required, trailer connected to the vehicle **100**, an auxiliary device connected to the vehicle **100** and a trailer not being in driving position. In other words, the trigger may be that a vehicle event has occurred, that a vehicle state has been detected, that an event or state in the vehicle or the vehicle's surroundings has occurred. The trigger may be associated with, for example a PTO, diff lock, 3^{rd} party equipment etc.

The processing circuitry **502** is configured to, when the first activation condition has been fulfilled, determine which computer application **203** of a plurality of known computer applications that is associated with the first activation condition, wherein the associated computer application **203** is currently inactivated and not using one or more computer system resources. The computer system resources may comprise RAM memory, CPU and GPU time. The computer system resources do not include memory storage. The computer application **203** may exist on the storage from before, but it is not running in foreground meaning that it does not take any RAM memory or execution time from the CPU or GPU.

The processing circuitry **502** is configured to activate the computer application **203** associated with the first activation condition and allowing it to use computer system resources.

The processing circuitry **502** may be configured to determine whether a second activation condition has been fulfilled. The second activation condition may be fulfilled when the vehicle user's workload is below a workload threshold.

When the vehicle user's workload is below the workload threshold, it may be considered to be safe to distract the vehicle user with activation of the computer application **203.** When the vehicle user's workload has reached or exceeded the workload threshold, it may be considered to be unsafe to distract the vehicle user with activation of the computer application **203.**

The workload threshold may be predefined.

To determine that the vehicle user's workload is below the workload threshold, data recorded by user monitoring sensors comprised in the vehicle **100** may be collected, analyzed and compared with the workload threshold. Thus, the vehicle user's workload is determined based on the data recorded by the user monitoring sensors.

The computer application **203** may be activated when the first activation condition and the second activation condition have been fulfilled.

The processing circuitry **502** may be configured to determine to queue activating the computer application 203 when the first activation condition has been fulfilled and the second activation condition has not been fulfilled. The activation may be queued until the second activation condition has been fulfilled.

The processing circuitry **502** may be configured to trigger to display information associated with the computer application **203** in a display onboard the vehicle **100.**

The processing circuitry **502** may be configured to determine whether or not the computer application **203** associated with the first activation condition is currently installed onboard the vehicle **100.**

The processing circuitry **502** may be configured to trigger to install the computer application **203** when it is not currently installed. The computer application **203** may be activated after the computer application has been installed.

A computer program product comprises program code for performing, when executed by the processing circuitry **502**, the method of described herein.

A non-transitory computer-readable storage medium comprises instructions, which when executed by a processing circuitry **502** cause the processing circuitry **502** to perform the method described herein.

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504**, and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510**, which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514**, which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A computer system **201, 500** for handling activation of a computer application **203** in a vehicle **100**, the computer system **201, 500** comprising processing circuitry **502** configured to:
- monitor fulfillment of a first activation condition for activating the computer application **203**, wherein the first activation condition is fulfilled when a trigger associated with the vehicle **100** has occurred;
- when the first activation condition has been fulfilled, determine which computer application **203** of a plurality of known computer applications that is associated with the first activation condition, wherein the associated computer application **203** is currently inactivated and not using one or more computer system resources; and to
- activate the computer application **203** associated with the first activation condition and allowing it to use computer system resources.

**Example 2**: The computer system **201, 500** of example 1, wherein the processing circuitry **502** is further configured to:
- determine whether a second activation condition has been fulfilled, wherein the second activation condition is fulfilled when vehicle user's workload is below a workload threshold.

**Example 3**: The computer system **201, 500** of any of examples 1-2, wherein the computer application **203** is activated when the first activation condition and the second activation condition have been fulfilled.

**Example 4:** The computer system **201, 500** of any of examples 1-3, wherein the processing circuitry **502** is further configured to determine to queue activating the computer application **203** when the first activation condition has been fulfilled and the second activation condition has not been fulfilled, wherein the activation is queued until the second activation condition has been fulfilled.

**Example 5**: The computer system **201, 500** of any of examples 1-4, wherein the processing circuitry **502** is further configured to trigger to display information associated with the computer application **203** in a display onboard the vehicle **100.**

**Example 6:** The computer system **201, 500** of any of examples 1-5, wherein the processing circuitry **502** is further configured to determine whether or not the computer application **203** associated with the first activation condition is currently installed onboard the vehicle **100.**

**Example 7**: The computer system **201, 500** of any of examples 1-6, wherein the processing circuitry **502** is further configured to trigger to install the computer application **203** when it is not currently installed.

**Example 8:** The computer system **201, 500** of any of examples 1-7, wherein the computer application **203** is activated after the computer application has been installed.

**Example 9**: The computer system **201, 500** of any of examples 1-7, wherein the trigger for the first activation condition is one or more of: a full diff-lock, activation of a PTO, entering or leaving a geofenced area, driving with reverse gear, request assistance, maintenance required, trailer connected to the vehicle **100**, an auxiliary device connected to the vehicle 100 and a trailer not being in driving position.

**Example 10:** A vehicle **100** comprising the computer system **201, 500** of any of examples 1-9.

**Example 11:** A computer-implemented method for handling activation of a computer application **203** in a vehicle **100,** the method comprising:
- *monitoring* **301**, by a processing circuitry **502** of a computer system **201, 500,** fulfillment of a first activation condition for activating the computer application **203**, wherein the first activation condition is fulfilled when a trigger associated with the vehicle **100** has occurred;
- when the first activation condition has been fulfilled, *determining* **302**, by the processing circuitry **502**, which computer application **203** of a plurality of known computer applications that is associated with the first activation condition, wherein the associated computer application **203** is currently inactivated and not using one or more computer system resources; and
- *activating* **307**, by the processing circuitry **502**, the computer application **203** associated with the first activation condition and allowing it to use computer system resources.

**Example 12:** The method of example 11, further comprising:
- *determining* **305**, by the processing circuitry **502**, whether a second activation condition has been fulfilled, wherein the second activation condition is fulfilled when vehicle user's workload is below a workload threshold.

**Example 13:** The method example 12, wherein the computer application **203** is activated when the first activation condition and the second activation condition have been fulfilled.

**Example 14:** The method of any of examples 11-13, further comprising:
- *determining,* by the processing circuitry **502,** to queue activating the computer application **203** when the first activation condition has been fulfilled and the second activation condition has not been fulfilled, wherein the activation is queued until the second activation condition has been fulfilled.

**Example 15:** The method of any of examples 11-14, further comprising:
- *triggering*, by the processing circuitry **502,** to display information associated with the computer application **203** in a display onboard the vehicle **100.**

**Example 16:** The method of any of examples 11-15, further comprising:
- *determining,* by the processing circuitry **502,** whether or not the computer application **203** associated with the first activation condition is currently installed onboard the vehicle **100.**

**Example 17:** The method of any of examples 11-16, further comprising:
- *triggering*, by the processing circuitry **502,** to install the computer application **203** when it is not currently installed.

**Example 18:** The method of any of examples 11-17, wherein the computer application **203** is activated after the computer application has been installed.

**Example 19:** The method of any of examples 11-18, wherein the trigger for the first activation condition is one or more of: a full diff-lock, activation of a PTO, entering or leaving a geofenced area, driving with reverse gear, request assistance, maintenance required, trailer connected to the vehicle **100,** an auxiliary device connected to the vehicle **100** and a trailer not being in driving position.

**Example 20:** A computer program product comprising program code for performing, when executed by a processing circuitry **502**, the method of any of examples 11-19.

**Example 21:** A non-transitory computer-readable storage medium comprising instructions, which when executed by a processing circuitry **502**, cause the processing circuitry **502** to perform the method of any of examples 11-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (201, 500) for handling activation of a computer application (203) in a vehicle (100), the computer system (201, 500) comprising processing circuitry (502) configured to:
monitor fulfillment of a first activation condition for activating the computer application (203), wherein the first activation condition is fulfilled when a trigger associated with the vehicle (100) has occurred;
when the first activation condition has been fulfilled, determine which computer application (203) of a plurality of known computer applications that is associated with the first activation condition, wherein the associated computer application (203) is currently inactivated and not using one or more computer system resources; and to
activate the computer application (203) associated with the first activation condition and allowing it to use computer system resources.

2. The computer system (201, 500) of claim 1, wherein the processing circuitry (502) is further configured to:
determine whether a second activation condition has been fulfilled, wherein the second activation condition is fulfilled when the user's workload is below a workload threshold.

3. The computer system (201, 500) of any of claims 1-2, wherein the computer application (203) is activated when the first activation condition and the second activation condition have been fulfilled.

4. The computer system (201, 500) of any of claims 1-3, wherein the processing circuitry (502) is further configured to:
determine to queue activating the computer application (203) when the first activation condition has been fulfilled and the second activation condition has not been fulfilled, wherein the activation is queued until the second activation condition has been fulfilled.

5. The computer system (201, 500) of any of claims 1-4, wherein the processing circuitry (502) is further configured to:
trigger to display information associated with the computer application (203) in a display onboard the vehicle (100).

6. The computer system (201, 500) of any of claims 1-5, wherein the processing circuitry (502) is further configured to:
determine whether or not the computer application (203) associated with the first activation condition is currently installed onboard the vehicle (100).

7. The computer system (201, 500) of any of claims 1-6, wherein the processing circuitry (502) is further configured to:
trigger to install the computer application (203) when it is not currently installed.

8. The computer system (201, 500) of any of claims 1-7, wherein the computer application (203) is activated after the computer application has been installed.

9. The computer system (201, 502) of any of claims 1-8, wherein the trigger for the first activation condition is one or more of: a full diff-lock, activation of a Power Take Off, PTO, entering or leaving a geofenced area, driving with reverse gear, request assistance, maintenance required, trailer connected to the vehicle (100), an auxiliary device connected to the vehicle (100) and a trailer not being in driving position.

10. A vehicle (100) comprising the computer system (201, 500) of any of claims 1-9.

11. A computer-implemented method for handling activation of a computer application (203) in a vehicle (100), the method comprising:
*monitoring* (301), by a processing circuitry (502) of a computer system (201, 500), fulfillment of a first activation condition for activating the computer application (203), wherein the first activation condition is fulfilled when a trigger associated with the vehicle (100) has occurred;
when the first activation condition has been fulfilled, *determining* (302), by the processing circuitry (502), which computer application (203) of a plurality of known computer applications that is associated with the first activation condition, wherein the associated computer application (203) is currently inactivated and not using one or more computer system resources; and
*activating* (307), by the processing circuitry (502), the computer application (203) associated with the first activation condition and allowing it to use computer system resources.

12. The method of claim 11, further comprising:
*determining* (305), by the processing circuitry (502), whether a second activation condition has been fulfilled, wherein the second activation condition is fulfilled when the user's workload is below a workload threshold.

13. The method of claim 12, wherein the computer application (203) is activated when the first activation condition and the second activation condition have been fulfilled.

14. A computer program product comprising program code for performing, when executed by a processing circuitry (502), the method of any of claims 11-13.

15. A non-transitory computer-readable storage medium comprising instructions, which when executed by a processing circuitry (502), cause the processing circuitry (502) to perform the method of any of claims 11-13.
